Europäisches Patentamt

European Patent Office

Office européen des brevets

(11) Numéro de publication: **0 002 987**
**A1**

# (12) DEMANDE DE BREVET EUROPEEN

(21) Numéro de dépôt: 78400252.9

(22) Date de dépôt: 20.12.78

(51) Int. Cl.²: **A 47 J 31/40, G 07 F 11/02**

(30) Priorité: **30.12.77 FR 7739838**

(43) Date de publication de la demande: **11.07.79**
**Bulletin 79/14**

(84) Etats contractants désignés: **BE CH DE FR GB IT NL SE**

(71) Demandeur: **SOCIETE GENERALE POUR L'EMBALLAGE, 7, rue Eugène-Flachat, F-75849 Paris Cedex 17 (FR)**

(72) Inventeur: **Lagneaux, Jean, "Les Hautes Gouttes" Graix, F-42220 Bourg-Argental (FR)**

(74) Mandataire: **Heyndryckx, Paula, 62, Bd Victor Hugo, F-92209 Neuilly sur Seine (FR)**

(54) Procédé et machine pour la préparation sur le lieu de consommation de doses unitaires de boissons et produit utilisable dans le procédé.

(57) L'invention concerne une machine pour la préparation de doses unitaires de boissons contenues dans des enveloppes-doses étanches comportant au moins une amorce de canal d'écoulement pour faciliter l'évacuation de la dose.

La machine comprend un bâti (18) sur lequel sont montés verticalement deux plateaux de presse (21, 22), un siège formé sur le bâti et sur lequel l'enveloppe-dose (12) est maintenue entre les plateaux de presse avec l'amorce de canal d'écoulement (16) tournée vers le bas et dépassant sous les plateaux, deux mâchoires (24, 26) montées mobiles l'une vers l'autre de manière à serrer l'amorce de canal, des organes (28, 30) de sectionnement de l'amorce de canal, des moyens d'expulsion de l'enveloppe vidée d'entre les plateaux de presse, et des moyens moteurs (32) de tout type convenable destinés à commander en séquence le mouvement des plateaux, des mâchoires et des organes de sectionnement.

Application à la distribution de boissons.

PROCÉDÉ ET MACHINE POUR LA PREPARATION SUR LE LIEU DE CONSOMMATION
DE DOSES UNITAIRES DE BOISSONS ET PRODUIT UTILISABLE DANS LE PROCÉDÉ.

La présente invention concerne un procédé pour la préparation sur le lieu même de consommation, de boissons élaborées dans des gobelets, à partir de doses contenues dans une enveloppe en matériau souple ou semi-souple.Elle concerne également une machine pour la mise en oeuvre de ce procédé.

Trois procédés sont généralement utilisés pour préparer des boissons sur le lieu de consommation.Le premier, qui est le plus ancien, consiste à distribuer des boissons à partir de concentrés stockés dans de grands récipients. Chaque récipient alimente un bec de soutirage qui délivre donc toujours la même boisson. Les inconvénients de ce procédé résident dans le fait qu'il met à la disposition du consommateur un nombre restreint de produits et qu'il utilise un matériel assez encombrant.

Le deuxième procédé consiste à utiliser des emballages en matériau rigide sous forme de godets coniques fermés par une pellicule thermoscellable, à percer la pellicule pour introduire dans le godet un gaz d'expulsion du contenu et à couper un téton prévu dans le fond du godet de façon à permettre la libre évacuation du contenu. Ce procédé permet bien de préparer une boisson différente à chaque soutirage, mais en raison de la forme complexe du godet il se pose des problèmes délicats de manutention et d'emballage.D'autre part, les godets constituent des emballages relativement coûteux. Enfin, la durée de la vidange de leur contenu dépend de la nature de celui-ci et de son état au moment de l'utilisation: type de sirop, viscosité du sirop, température ambiante, etc.

2

Le troisième de ces procédés recourt à l'utilisation de doses de produit contenues dans des enveloppes à deux faces en matériau souple, par exemple en film simple ou complexe de polypropylène, polyéthylène, polyester, etc. ou semi-souple, par exemple en complexe de polyéthylène-aluminium-polyester ou polyéthylène-aluminium-papier laqué, la nature des films étant choisie en fonction de la durée de conservation souhaitée du produit conditionné et du comportement de la dose par rapport au milieu ambiant. L'enveloppe forme un berlingot à ouvrir pour permettre l'évacuation du produit. Selon l'invention, cette enveloppe comporte une amorce de canal d'écoulement, de préférence à entrée fermée, facilitant l'évacuation du produit après la coupe.

Le procédé selon l'invention consiste successivement à maintenir l'enveloppe-dose au-dessus du gobelet, à l'intérieur d'une chambre munie de moyens de pressage agissant sur ses deux faces, à sectionner l'enveloppe-dose, puis à la comprimer latéralement par action des moyens de pressage jusqu'à expulsion totale de la dose et enfin, à l'évacuer, vide, de la chambre de pressage et l'enveloppe-dose est introduite dans la chambre de pressage avec sa zone d'écoulement et plus particulièrement son amorce de canal tournée vers le bas, la zone de l'amorce de canal d'écoulement étant pincée entre des moyens de fermeture pendant l'opération de coupe sous la zone pincée, puis la zone pincée est relâchée pour permettre l'évacuation du produit sous l'action du pressage.

Sur le lieu d'utilisation, un liquide d'appoint plat ou gazeux, froid ou chaud, est préparé séparément et mélangé à la dose versée dans le jet même d'expulsion de cette dernière.

Selon un exemple avantageux, la machine selon l'invention, pour la préparation de doses unitaires de boissons, comprend essentiellement un bâti supportant une chambre de pressage munie d'un siège formé sur le bâti et sur lequel l'enveloppe-dose peut être posée entre les plateaux de la presse avec l'amorce de canal d'écoulement tournée et dépassant vers le bas, une presse comportant deux plateaux disposés de façon sensiblement verticale, de part et d'autre de l'enveloppe, deux mâchoires montées mobiles l'une vers l'autre sous les plateaux de manière à serrer la portion d'amorce de canal en saillie sous les plateaux, au-dessus du gobelet destiné à recevoir la boisson, des organes de sectionnement de l'extrémité de l'amorce de canal située sous les mâchoires, des moyens d'expulsion de l'enveloppe vidée d'entre les plateaux de presse, et des moyens moteurs destinés à commander en séquence le mouvement de rapprochement et d'écartement des plateaux, mâchoires et organes de sectionnement.

3

L'invention sera à présent décrite en regard des dessins annexés dans lesquels:

la figure 1 est une vue en élévation de face d'une enveloppe-dose de forme rectangulaire;

la figure 2 est une vue en élévation de profil de l'enveloppe-dose de la figure 1,

la figure 3 est un détail de la figure 1,

la figure 4 est une vue en perspective partielle et schématique d'une machine selon l'invention destinée à manipuler et à sectionner l'enveloppe-dose;

les figures 5 à 10 montrent des vues en coupe de la machine selon l'invention dans les différentes positions d'un cycle de fonctionnement.

L'enveloppe-dose 10 est réalisée à partir d'un film ou d'un complexe feuilleté de matière souple ou semi-souple. Elle comprend une poche 12 dans laquelle est conditionnée une dose de produit, liquide ou pâteux, servant à la préparation de la boisson. La poche est bordée d'une marge 14 constituée par les bords, collés ou thermo-soudés, des deux feuilles de matière utilisées pour fabriquer l'enveloppe.

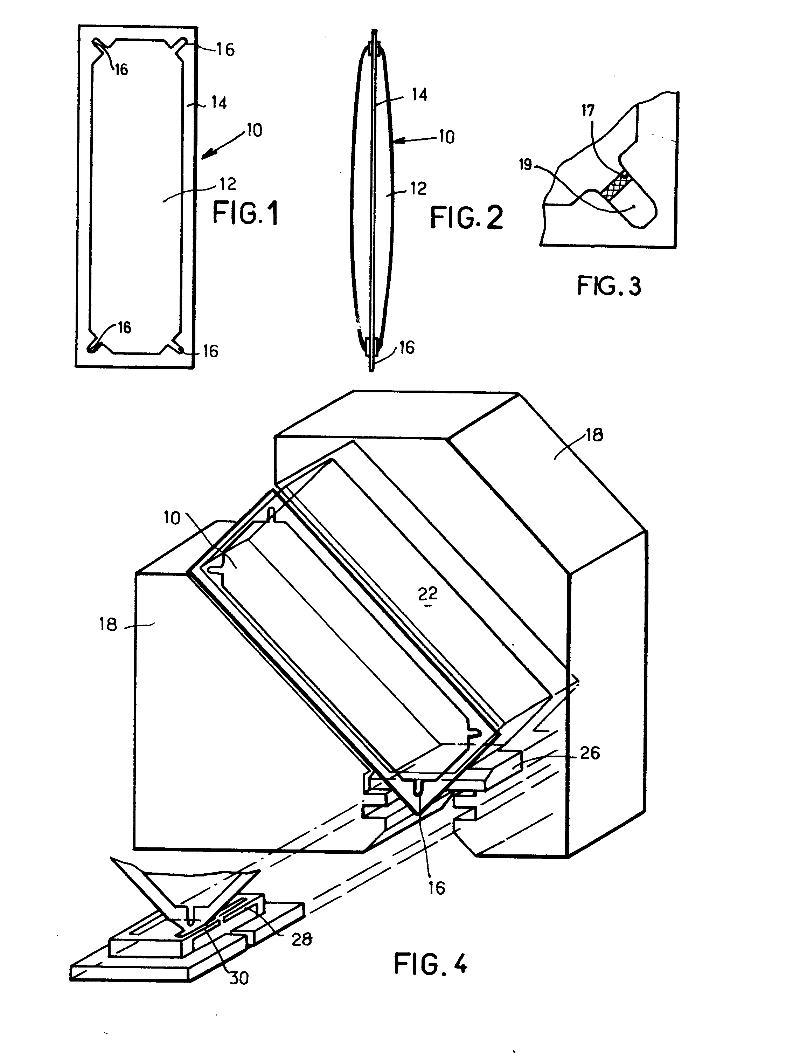

L'enveloppe-dose peut se présenter sous diverses formes, par exemple carrée, rectangulaire, comme dans l'exemple illustré par les figures 1 et 2, ou même losange. Aux angles de la poche 12 sont formées des amorces 16 de canaux d'écoulement, par lesquels le produit conditionné peut s'écouler, après l'opération de coupe. L'existence d'une amorce de canal à chacun des angles de la poche 12 permet de positionner correctement et sans aucun tâtonnement l'enveloppe-dose dans la machine, comme on le verra par la suite. De façon avantageuse, cette amorce de canal est barrée par une soudure 17, de façon à créer une zone vide 19. Lors de l'utilisation, c'est cette zone 19 qui se trouve sectionnée, ce qui évite tout risque de salissure des organes de sectionnement. La soudure 17 constitue alors un point faible qui cède sous la pression du liquide lors du pressage de l'enveloppe.

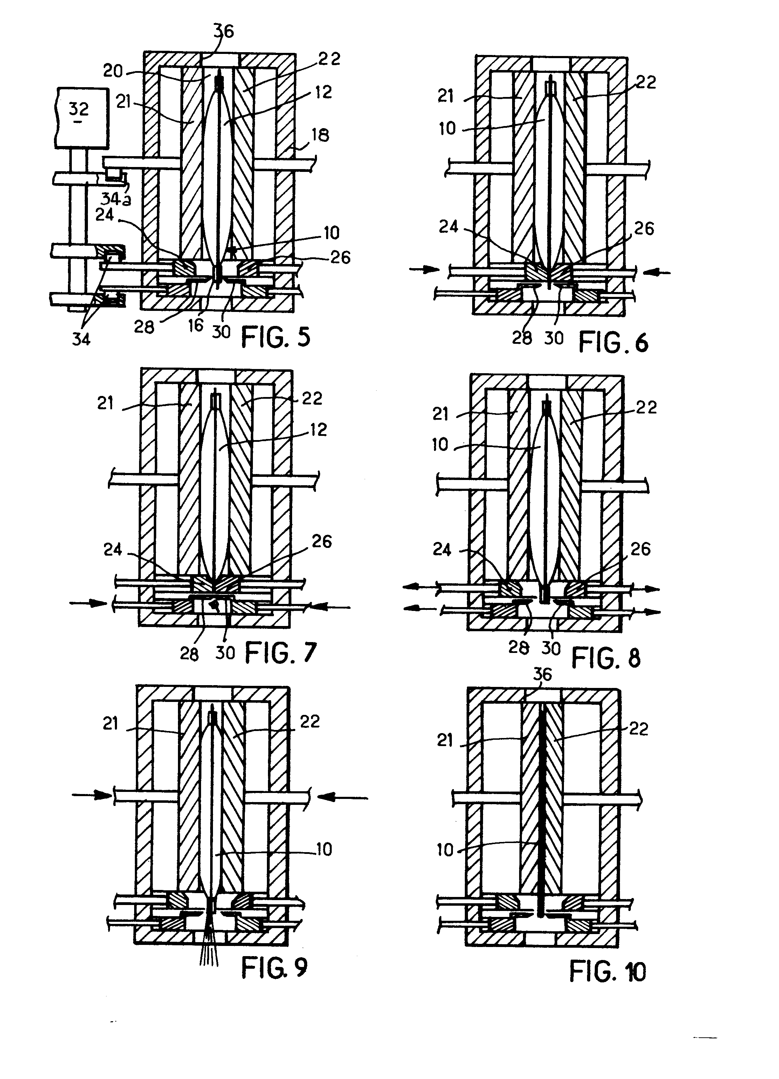

Comme le montrent les figures 4 et 5, la machine pour la préparation de boissons comprend un bâti 18 ouvert à sa partie inférieure pour laisser passer un angle de l'enveloppe-dose 10. Celle-ci est introduite dans une chambre 20 entre des plateaux de presse 21, 22, capables de coulisser horizontalement, et susceptibles d'être rapprochés ou écartés l'un de l'autre par des moyens d'entraînement appropriés et repose en position plus ou moins verticale, par deux de ses côtés, sur le bâti 18.

4

Comme le montre la figure 5, l'angle inférieur de l'enveloppe-dose ainsi que l'amorce de canal 16 qu'il contient font saillie sous les plateaux 21, 22 de la presse. Dans le bâti 18, sont montées coulissantes en mouvement réciproque deux mâchoires 24, 26 disposées de façon à ce qu'en position rapprochée, elles pincent la portion d'angle de l'emballage-dose qui fait saillie sous les plateaux.

Des couteaux 28, 30 montés coulissants sur le bâti sous les mâchoires 24, 26 sont susceptibles de sectionner l'extrémité du canal d'écoulement qui fait saillie sous les mâchoires.

Le mouvement des plateaux de presse 21, 22, des mâchoires 24, 26 et des couteaux 28, 30 est commandé, soit automatiquement, par exemple par un moteur 32 et une transmission à cames 34, soit manuellement, le moteur électrique étant remplacé par un moyen mécanique, tel qu'un levier.

Par ailleurs, l'appareil comprend des éléments pour le traitement du liquide d'appoint, à savoir un groupe frigorifique, un saturateur en gaz carbonique et un élément de chauffage, non représentés, de même que des organes de présentation de gobelets vides.

Le fonctionnement de l'appareil est détaillé dans les figures 5 à 10. L'enveloppe-dose 10 à vider est introduite entre les plateaux de presse 21, 22 qui, ainsi que les mâchoires 24, 26 et les couteaux 28, 30 se trouvent en position de retrait (figure 5).

Comme on l'a déjà expliqué, l'enveloppe-dose repose sur le bâti 18 avec son angle inférieur engagé dans l'ouverture du bâti.

Les mâchoires 24, 26 sont ensuite rapprochées et pincent l'angle saillant de l'enveloppe-dose (figure 6) de manière à empêcher l'écoulement du produit conditionné pendant l'opération de coupe. Après serrage de l'angle, les couteaux 28, 30 se rapprochent et sectionnent l'amorce de canal d'écoulement 16 (figure 7), mettant ainsi à l'air libre la zone 19. Les couteaux sont avantageusement réalisés de manière que la chute coupée reste partiellement rattachée à l'enveloppe. On évite ainsi que la chute tombe dans le produit versé.

Après l'opération de coupe, les couteaux s'effacent, les mâchoires se retirent (figure 8), puis les plateaux 21, 22 de la presse compriment l'enveloppe-dose (figure 9) faisant céder la soudure 17 et avancent jusqu'à expulsion totale du contenu (figure 10). L'extraction de l'enveloppe vide peut se faire, soit manuellement par une ouverture supérieure 36 du bâti, soit automatiquement par déplacement de l'ensemble des plateaux de

5

la presse en face d'un couloir d'évacuation parallèle à la chambre sous l'action de leurs cames respectives dont seule 34a est représentée.

Le liquide d'appoint est débité par un bec, non représenté, dirigé de façon que la rencontre des jets de liquide d'appoint et de produit versé se fasse dans l'espace, leur mélange commençant au début de leur chute et se terminant dans le récipient récepteur.

Le procédé et la machine selon l'invention ont l'avantage de permettre la préparation d'une boisson différente à chaque soutirage. Les doses utilisées sont relativement bon marché et sont faciles à manipuler et à stocker. Le contenu, qui peut être pâteux, est exprimé régulièrement et complètement.

Ce procédé est applicable à tous les cas où un produit concentré doit être mélangé à un liquide d'appoint à une cadence élevée et sans que le produit concentré soit manipulé manuellement.

1

REVENDICATIONS

1. Procédé pour la préparation sur le lieu même de consommation de doses unitaires de boissons, élaborées dans des gobelets, à partir d'enveloppes-doses renfermant un produit liquide ou pâteux, concentré ou non et constituées par une enveloppe souple comportant au moins une amorce de canal d'écoulement pour faciliter l'évacuation du produit, ce procédé consistant successivement à maintenir l'enveloppe-dose au-dessus du gobelet, à l'intérieur d'une chambre munie de moyens de pressage, agissant sur ses deux faces, à sectionner l'enveloppe-dose puis à la comprimer latéralement par action des moyens de pressage jusqu'à expulsion totale de la dose et enfin, à l'évacuer, vide, de la chambre de pressage, caractérisé en ce que l'enveloppe-dose est introduite dans la chambre de pressage avec sa zone d'écoulement et plus particulièrement son amorce de canal tournée vers le bas, que la zone de l'amorce de canal d'écoulement est pincée entre des moyens de fermeture pendant l'opération de coupe sous la zone pincée, puis que la zone pincée est relachée pour permettre l'évacuation du produit sous l'action du pressage.

2. Procédé selon la revendication 1, caractérisé en ce que le sectionnement de l'amorce de canal est partiel et l'extrémité de cette amorce relevée avant relachement du pincement.

3. Procédé selon la revendication 1, caractérisé en ce qu'un liquide d'appoint plat ou gazeux, froid ou chaud et préparé séparément est ajouté au produit expulsé de l'enveloppe sous forme d'un jet qui rencontre le jet de produit dirigé vers le fond du gobelet.

4. Machine pour la préparation de doses unitaires de boissons sur le lieu même de consommation, conformément au procédé selon l'une des revendications 1 et 2, comprenant un bâti supportant une chambre de pressage munie d'un siège formé sur le bâti (18) et sur lequel l'enveloppe-dose peut être posée entre les plateaux de la presse avec l'amorce de canal d'écoulement tournée et dépassant vers le bas et caractérisée par une presse comportant deux plateaux (21, 22) disposés de façon sensiblement verticale, de part et d'autre de l'enveloppe, deux mâchoires (24, 26) montées mobiles l'une vers l'autre sous les plateaux de manière à serrer la portion d'amorce de canal en saillie sous les plateaux, au-dessus du gobelet destiné à recevoir la boisson, des organes de sectionnement (28, 30) de l'extrémité de l'amorce de

0002987

2

canal située sous les mâchoires, des moyens d'expulsion (34a) de l'enveloppe vidée d'entre les plateaux de presse, et des moyens moteurs de tout type convenable destinés à commander en séquence le mouvement de rapprochement et d'écartement des plateaux, des mâchoires et des organes de sectionnement.

5. Machine selon la revendication 4, caractérisée en ce que les moyens d'expulsion de l'enveloppe agissent par déplacement de l'un des plateaux de la presse (21) après effacement du plateau opposé (22).

6. Machine selon la revendication 5, caractérisé en ce que les moyens moteurs sont automatiques et comprennent par exemple un moteur électrique (32) entraînant en rotation un arbre portant des cames (34) qui agissent en séquence sur les plateaux de presse, les mâchoires et les organes de sectionnement.

7. Emballage-dose utilisable dans le procédé selon l'une des revendications 1 et 2 et constitué par une enveloppe de forme quadrangulaire, renfermant une dose de produit liquide ou pâteux, concentré ou non, et constituée par un film simple ou un complexe feuilleté de matière souple ou semi-souple, caractérisé en ce que ladite enveloppe comporte des amorces de canal d'écoulement dans plus d'un angle.

8. Emballage-dose selon la revendication 7, caractérisé en ce que les amorces de canal d'écoulement sont barrées par une soudure créant une zone vide.

9. Emballage-dose selon l'une des revendications 7 et 8, de forme carré, rectangulaire ou losange et comportant des amorces de canal à ses quatre angles.

0002987

PL: I-2

FIG.1

FIG.2

FIG.3

FIG.4

FIG. 5

FIG. 6

FIG. 7

FIG. 8

FIG. 9

FIG. 10

Office européen des brevets

**RAPPORT DE RECHERCHE EUROPEENNE**

Numéro de la demande

EP 78 40 0252

| Catégorie | DOCUMENTS CONSIDERES COMME PERTINENTS | Revendica-tion concernée | CLASSEMENT DE LA DEMANDE (Int. Cl.²) |
|---|---|---|---|
| | **Citation du document avec indication, en cas de besoin, des parties pertinentes** | | |
| | FR - A - 1 410 288 (DUCOMET)<br>* En totalité * | 1,3,7 | A 47 J 31/40<br>G 07 F 11/02 |
| | US - A - 4 008 657 (YAMAMURA et al.)<br>* Colonne 5, lignes 49-51; figure 1 * | 1 | |
| | US - A - 3 340 789 (SIMJIAN)<br>* Figures 2 et 3; colonne 2, lignes 47-61 * | 1,7 | **DOMAINES TECHNIQUES RECHERCHES (Int. Cl.²)**<br><br>A 47 J<br>G 07 F<br>B 67 |
| | US - A - 3 340 790 (SIMJIAN)<br>* Figure 1, colonne 2, lignes 51-64 * | 1,7 | |
| | US - A - 3 469 521 (SIMJIAN)<br>* Figures 1 et 4, colonne 5, lignes 19-55 *<br>---- | 1 | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 04-04-1979 | SCHARTZ |

OEB Form 1503.1  06.78